# NEUE EUROPÄISCHE PATENTSCHRIFT

(11) **EP 0 771 619 B2**
(45) Veröffentlichungstag und Bekanntmachung des Hinweises auf die Entscheidung über den Einspruch: **10.11.2004**
(45) Hinweis auf die Patenterteilung: 05.12.2001
(21) Anmeldenummer: 96115427.5
(22) Anmeldetag: 26.09.1996
(51) Int. Cl.: B25D 16/00, B25F 5/00, F16P 7/02

(54) **Verfahren zum Unterbrechen der Antriebstätigkeit einer Handwerkzeugmaschine, sowie nach diesen Verfahren arbeitende Handwerkzeugmaschine**
Process for interrupting the operation of a hand tool and hand tool therefore
Procédé d'interruption de l'entraînement d'un outil à main et outil à main correspondant

(30) Priorität: 02.11.1995 DE 19540717; 18.07.1996 DE 19628945
(43) Veröffentlichungstag der Anmeldung: 07.05.1997
(73) Patentinhaber: ROBERT BOSCH GMBH, 70442 Stuttgart (DE)
(72) Erfinder: Leitenberger, Thomas, Dipl.-Ing. (BA), 70565 Stuttgart (DE); Thome, Ludwig, Dr.-Ing., 70771 Leinfelden-Echterdingen (DE); Hirschburger, Wolfgang, Dipl.-Ing., 72766 Reutlingen (DE)

(56) Entgegenhaltungen:
- EP-A- 0 345 655
- EP-B- 0 303 651
- EP-B- 0 666 148
- DE-A- 4 334 933
- US-A- 4 426 588
- US-A- 5 914 882

## Beschreibung

### Stand der Technik

Die Erfindung geht aus von einem Verfahren zum Unterbrechen der Antriebstätigkeit einer Handwerkzeugmaschine nach dem Oberbegriff des Anspruchs 1 bzw. von einer Handwerkzeugmaschine nach dem Oberbegriff des Anspruchs 5 wie es in DE 43 34 933 A offenbart ist. Es ist weiterhin ein derartiges Verfahren bzw. eine Handwerkzeugmaschine bekannt (WO 88/06508), bei dem bzw. der die Drehantriebstätigkeit dann unterbrochen wird, wenn ein Wert einer die räumliche Bewegung der Handwerkzeugmaschine als Ganzes kennzeichnenden Bewegungsgröße einen vorbestimmten Schwellwert überschreitet. Zwar läßt sich mit dem bekannten Verfahren bzw. mit der bekannten Handwerkzeugmaschine bereits auf einfache Weise das Eintreten eines vom Bediener der Handwerkzeugmaschine nicht oder nur schwer zu beherrschenden Betriebszustandes erkennen. Je nach Art der als Kriterium verwendeten Bewegungsgröße und der Höhe des festgelegten Schwellwertes kann es jedoch auch im Normalbetrieb zu einer Auslösung der Antriebsunterbrechung kommen, was zu vermeiden ist.

### Vorteile der Erfindung

Das erfindungsgemäße Verfahren mit den Merkmalen des Anspruchs 1 bzw. die erfindungsgemäße Handwerkzeugmaschine mit den Merkmalen des Anspruchs 5 hat den Vorteil, daß eine sichere Erkennung des unbeherrschten Blockierfalls gewährleistet ist und Fehlauslösungen der Antriebsunterbrechung im Normalbetrieb weitgehend vermieden werden.

Durch die in den abhängigen Ansprüchen aufgeführten Maßnahmen sind vorteilhafte Weiterbildungen und Verbesserungen des im Anspruch 1 angegebenen Verfahrens bzw. der im Anspruch 5 angegebenen Handwerkzeugmaschine möglich. Besonders vorteilhaft ist es, die Schwellwerte der jeweiligen Bewegungsgröße, bei deren Erreichen oder Überschreiten ein Auslösesignal erzeugt wird, nach einem Fuzzy-Algorithmus festzulegen.

### Zeichnung

Zwei Ausführungsbeispiele der Erfindung sind in der Zeichnung dargestellt und in der nachfolgenden Beschreibung näher erläutert. Es zeigen Figur 1 eine prinzipielle Darstellung des erfindungsgemäßen Verfahrens bzw. der erfindungsgemäßen Handwerkzeugmaschine mit einer ersten Auswerteeinrichtung, Figur 2 eine Darstellung des zeitlichen Verlaufs verschiedener Bewegungsgrößen und des zugehörigen Auslösesignals und Figur 3 eine prinzipielle Darstellung des erfindungsgemäßen Verfahrens bzw. der erfindungsgemäßen Handwerkzeugmaschine mit einer zweiten Auswerteeinrichtung.

### Beschreibung der Ausführungsbeispiele

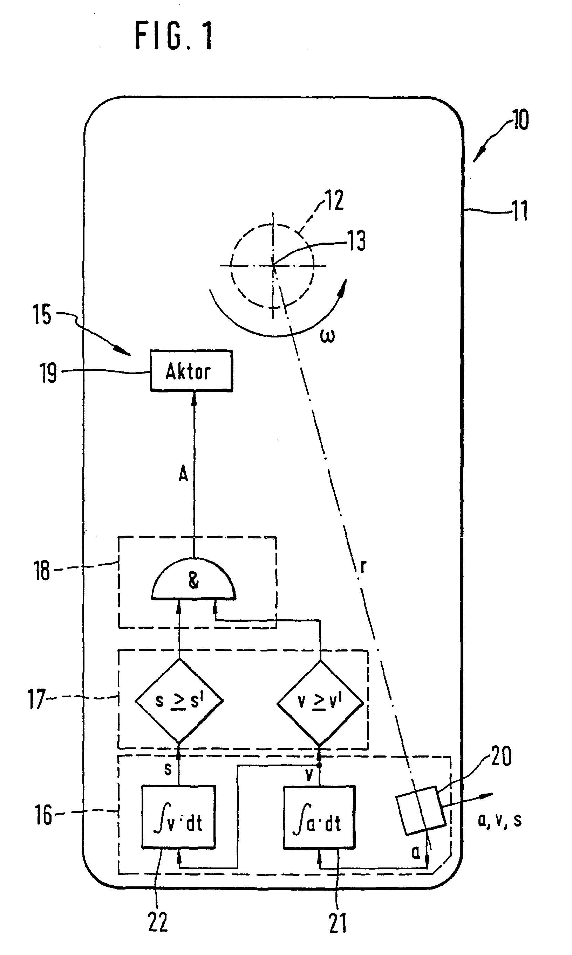

In Figur 1 ist mit 10 eine Handwerkzeugmaschine bezeichnet, welche von einem Gehäuse 11 umgeben ist. In dem Gehäuse 11 ist eine in Figur 1 nicht dargestellte Antriebseinrichtung untergebracht, welche zum drehenden Antrieb eines mit 12 bezeichneten, gestrichelt angedeuteten Werkzeugs um eine Drehachse 13 dient. Eine derartige Handwerkzeugmaschine ist beispielsweise bereits in der WO 88/06508 beschrieben, so daß hier auf eine Darstellung verzichtet werden kann.

Die Handwerkzeugmaschine 10 weist femer Mittel 15 zum Unterbrechen der Drehantriebstätigkeit auf das Werkzeug 12 auf. Die Mittel 15 umfassen eine Vorrichtung 16 zum Erfassen von Meßwerten bestimmter Bewegungsgrößen, die die räumliche Bewegung der Handwerkzeugmaschine 10 als Ganzes kennzeichnen. Darüber hinaus umfassen die Mittel 15 eine Vergleichseinrichtung 17 zum Vergleichen von durch die Vorrichtung 16 erfaßten Meßwerten mit vorbestimmten Schwellwerten, einen Operator 18, mittels dessen die Vergleichsergebnisse der Vergleichseinrichtung 17 logisch verknüpfbar sind und einen Aktor 19 der die Drehantriebstätigkeit der Handwerkzeugmaschine 10 gegebenenfalls unterbricht. Die Vergleichseinrichtung 17 und der Operator 18 bilden eine Auswerteeinrichtung zur Erzeugung eines Auslösesignals zur Aktivierung des Aktors 19.

Im Beispielsfall ist die Vorrichtung 16 zum Erfassen der räumlichen Bewegung der Handwerkzeugmaschine 10 als Ganzes, also ihres Gehäuses 11, derart ausgebildet, daß sowohl ein Weg s, den die Handwerkzeugmaschine 10 als Ganzes zurücklegt, als auch eine Geschwindigkeit v, mit der sich die Handwerkzeugmaschine 10 bewegt, erfaßbar ist. Die Erfassung der jeweiligen Werte der Bewegungsgrößen s, v erfolgt fortlaufend mittels eines Sensors 20 der Vorrichtung 16, der als Beschleunigungsaufnehmer ausgebildet ist und ein Beschleunigungssignal a erzeugt. Werden die Meßwerte jeweils nach bestimmten Zeitintervallen ermittelt, kann durch die Wahl hinreichend kleiner Zeitintervalle ein quasikontinuierliches Meßsignal erzeugt werden, das für die Zwecke der Sicherheitsabschaltung geeignet ist.

Mit dem Sensor 20 kann sowohl die translatorische Beschleunigung, als auch die rotatorische Beschleunigung der Handwerkzeugmaschine 10 um die Drehachse 13 erfaßt werden. Für die Zwecke der Sicherheitsabschaltung im Falle des unbeherrschten Blockierfalles ist in erster Linie die rotatorische Beschleunigung des Gehäuses 11 der Handwerkzeugmaschiene 10 um die Drehachse 13 von Bedeutung. Aus diesem Grund ist der Sensor 20 im Abstand rzur Drehachse 13 angeordnet. Aus dem jeweils ermittelten Beschleunigungswert a wird durch zeitabhängige Integration das Geschwindigkeitssignal v und das Wegsignal s erzeugt. Die Vorrichtung 16 enthält hierzu einen ersten Integrator 21 für das Geschwindigkeitssignal v und einen zweiten Integrator 22 für das Wegsignal s. Beide Integratoren 21, 22 sind dazu mit dem Ausgang des Sensors 20 verbunden.

Die Signale v und s stellen jeweils die Werte der entsprechenden Bewegungsgröße Geschwindigkeit und Weg zu einem bestimmten Zeitpunkt t dar. Die Signale s und v werden an die Vergleichseinrichtung 17 weitergeleitet, wo sie mit entsprechenden Schwellwerten s' und v' verglichen werden. Die Schwellwerte s' und v' sind vorbestimmt und orientieren sich an für den jeweiligen Benutzer zumutbaren Grenzwerten, innerhalb derer ein beherrschbarer Betriebszustand der Handwerkzeugmaschine 10 üblicherweise vorliegt. Kommt es beim Betrieb der Handwerkzeugmaschine zu einem Blockieren des Werkzeugs 12, so wird das Gehäuse 11 im wesentlichen um die Drehachse 13 beschleunigt und es besteht die Gefahr, daß die Handwerkzeugmaschine 10 dem Bediener aus der Hand geschleudert wird. Die Beschleunigung, die die Handwerkzeugmaschine 10 dabei erfährt wird durch den Sensor 20 erfaßt und mittels der Integratoren 21 und 22 in das Geschwindigkeitssignal v und das Wegsignel s umgeformt.

Im Normalbetrieb kann es durchaus vorkommen, daß der Bediener die Handwerkzeugmaschine 10 bewußt um die Drehachse 13 schwenkt. Insbesondere im Hammerbetrieb kann es auch zu betriebsbedingten Beschleunigungen kommen. Es muß also ein verläßliches Kriterium für die Erkennung des unbeherrschten Blockierfalles gefunden werden, das bewußte bzw. betriebsbedingt normale Bewegungen von kritischen Bewegungen unterscheidet. Aus diesem Grund ist vorgesehen, daß die Sicherheitsabschaltung nur dann ausgelöst wird, wenn wenigstens zwei Bedingungen erfüllt sind, d.h. im Beispielsfall wenn sowohl die Wegstrecke s den zugehörigen Schwellwert s' erreicht oder überschreitet und wenn die Geschwindigkeit v den zugehörigen Schwellwert v' erreicht oder überschreitet. Die Erfüllung beider Kriterien wird durch den Operator 18 erkannt, der eine logische "und"-Verknüpfung der Vergleichssignale s ≥ s'und v ≥ v' zu einem Auslösesignal A vornimmt. Erst bei Vorliegen beider Bedingungen wird der Aktor 19 vom Operator 18 aktiviert. Der Aktor 19 kann beispielsweise als Trennkupplung im Antriebsstrang und/oder als Schalter zum Abschalten des Motors und/oder als Kupplung zur schlagartigen Verbindung des Gehäuses 11 mit dem Antriebsstrang ausgebildet sein. Eine besonders vorteilhafte Sicherheitsabschaltung zum Stoppen der beginnenden Drehbewegung des Gehäuses 11 der Handwerkzeugmaschine 10 wird durch das Vorsehen aller drei Aktorfunktionen erzielt. Die Schwellwerte s', v' und a' können auch vom Bediener festlegbar sein, so daß beispielsweise für bestimmte Anwendungsfälle ein höherer Schwellwert wählbar ist.

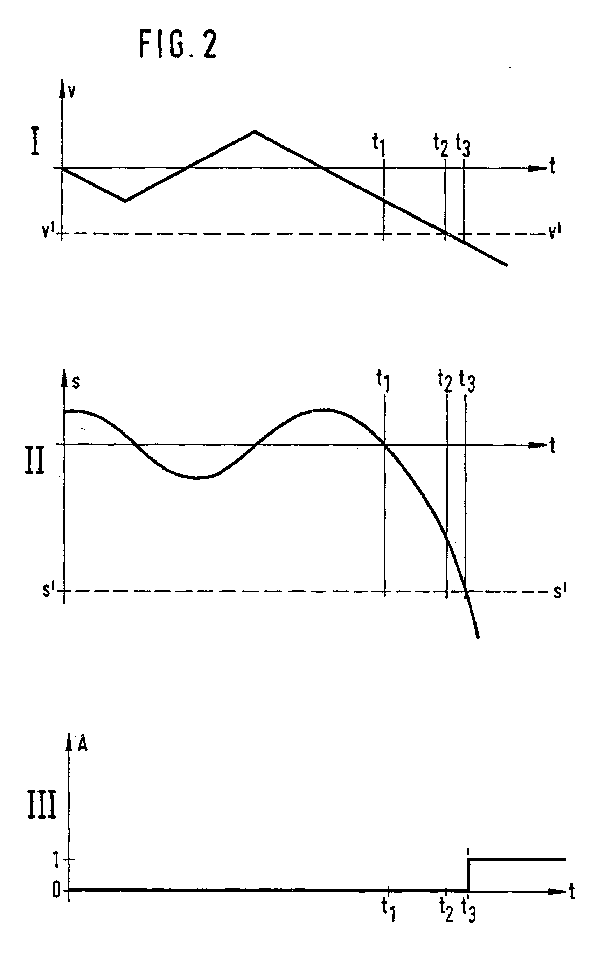

In Figur 2 ist in den Diagrammen I und II der zeitliche Verlauf der Werte der Bewegungsgrößen v und s und im Diagramm III der zugehörige Verlauf des vom Operator 18 erzeugten Auslösesignals A beispielhaft dargestellt. In den Diagrammen I und II sind diejeweiligen Schwellwerte v', s' eingetragen, die den als beherrschbar angesehenen Betriebsbereich der Handwerkzeugmaschine 10 begrenzen. Die Schwellwerte v', s' sind hier lediglich einseitig, d.h. für eine in einer bestimmten Laufrichtung betriebene Handwerkzeugmaschine dargestellt. Sind unterschiedliche Laufrichtungen möglich, so können entsprechende Grenzwerte auch für die andere Laufrichtung festgelegt werden. Im Diagramm I wird zum Zeitpunkt t = t₂ der Schwellwert v' erreicht. Der Aktor 19 wird zu diesem Zeitpu nkt t₂ jedoch nicht aktiviert, da der Wert der Bewegungsgröße s noch innerhalb des unkritischen Bereichs liegt. Erst zum Zeitpunkt t = t₃ erreicht der Wert der Bewegungsgröße s den für sie geltenden Grenzwert s'. Zu diesem Zeitpunkt t = t₃ sind beide Bedingungen für das Auslösen der Sicherheitsabschaltung erfüllt, so daß der Operator 18 das Auslösesignal A erzeugt und den Aktor 19 aktiviert. Die Sicherheitsabschaltung wird dadurch in Gang gesetzt.

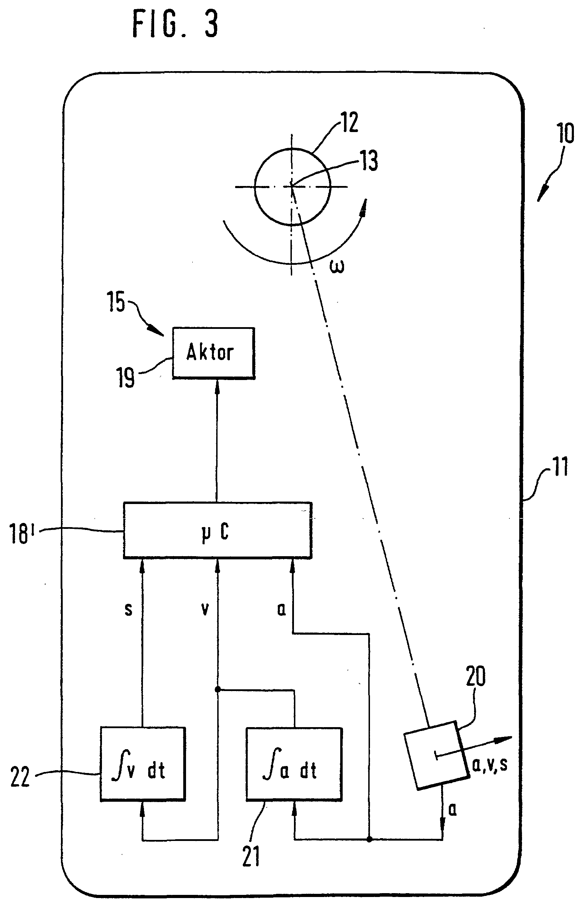

Das zweite Ausführungsbeispiel nach Figur 3 unterscheidet sich vom ersten Ausführungsbeispiel lediglich hinsichtlich der Signalverarbeitung. Es ist eine Auswerteeinrichtung 18' vorgesehen, in der in Abhängigkeitwenigstens zweier Werte der Bewegungsgrößen v, s und/oder a ein Auslösesignal nach einem Fuzzy-Algorithmus erzeugt wird. Fuzzy-Algorithmen sind allgemein bekannt, so daß sie hier nicht näher beschrieben werden müssen. Zum Zwecke der Offenbarung wird statt dessen auf die einschlägige Literatur, beispielsweise die Bücher "Fuzzy-Logic" von Constantin von Altrock, Verlag Oldenbourg und "Fuzzy-Logik" von Lilli, Francis-Verlag, verwiesen.

Im vorliegenden Beispiel sind die Schwellwerte s', v', a' für die jeweilige Bewegungsgröße s, v, a, bei deren Erreichen oder Überschreiten die Auslösung des Aktors 19 erfolgt, in Abhängigkeit der jeweils anderen Größe(n) festlegbar. So ist es beispielsweise möglich, bei Verwendung der beiden Bewegungsgrößen s und v wie beim ersten Ausführungsbeispiel, die Auslösung der Antriebsunterbrechung bei einem relativ hohen Wert von v schon bei einem niedrigen Schwellwert s' zu aktivieren und bei relativ kleinen Werten für v dagegen einen höheren Schwellwert s' festzulegen. Analog dazu kann dann der Schwellwert v' abhängig vom jeweiligen Wert der Bewegungsgröße s sein. Die Auswerteeinrichtung 18' wird dabei durch einen Microcontroller gebildet. Insgesamt ergibt sich so eine die Vielzahl möglicher Bewegungszustände der Handwerkzeugmaschine berücksichtigende Antriebsunterbrechung.

Die Erfindung ist nicht auf die dargestellten Ausführungsbeispiele beschränkt. So können auch andere oder alle Bewegungsgrößen zur Bildung des Auslösesignals A herangezogen werden. Die Erfindung kann bei allen Handwerkzeugmaschinen vorteilhaft Anwehdung finden, bei denen ein Werkzeug drehend antreibbar ist und außerdem die Gefahr besteht, daß beim Blockieren des Werkzeugs die Handwerkzeugmaschine dem Bediener aus der Hand gerissen wird.

## Patentansprüche

1. Verfahren zum Unterbrechen der Antriebstätigkeit einer Handwerkzeugmaschine (10) mit drehender Antriebsbewegung, insbesondere einer Bohr- bzw. Schlagbohrmaschine oder eines Bohrhammers, bei dem beim Betrieb der Handwerkzeugmaschine (10) der Wert einer die räumliche Bewegung der Handwerkzeugmaschine als Ganzes kennzeichnenden Bewegungsgröße erfaßt wird, wobei als Bewegungsgröße eine Beschleunigung (a), die die Handwerkzeugmaschine (10) erfährt, oder eine Geschwindigkeit (v), mit der sie sich bewegt, oder eine Wegstrecke (s), die sie zurücklegt, herangezogen wird und bei dem in Abhängigkeit des Wertes der Bewegungsgröße die Drehantriebstätigkeit der Handwerkzeugmaschine (10) bei Erreichen oder Überschreiten eines bestimmten Schwellwertes (s', v', a') unterbrochen wird, **dadurch gekennzeichnet, daß** die Werte von verschiedenen Bewegungsgrößen fortlaufend erfaßt werden und die Drehantriebstätigkeit der Handwerkzeugmaschine (10) nur dann unterbrochen wird, wenn wenigstens zwei Werte verschiedener Bewegungsgrößen einen für die jeweilige Bewegungsgröße vorbestimmten Schwellwert (v', s' oder a') erreicht oder überschritten haben.

2. Verfahren nach Anspruch 1, **dadurch gekennzeichnet, daß** die Werte der Bewegungsgrößen Wegstrecke (s) und Geschwindigkeit (v) erfaßt werden und daß die Drehantriebstätigkeit dann unterbrochen wird, wenn beide zugehörigen Schwellwerte (s' und v') erreicht oder überschritten wurden.

3. Verfahren nach einem der Ansprüche 1 oder 2, **dadurch gekennzeichnet, daß** die Unterbrechung der Drehantriebstätigkeit durch Auskuppeln im Antriebsstrang der Handwerkzeugmaschine (10) und/ oder durch Abschalten eines Antriebsmotors der Handwerkzeugmaschine (10) und/oder durch schlagartiges Verbinden eines Gehäuses (11) der Handwerkzeugmaschine (10) mit dem Antriebsstrang herbeigeführt wird.

4. Verfahren nach einem der Ansprüche 1 bis 3, **dadurch gekennzeichnet, daß** die Schwellwerte (v', s' und/oder a') der jeweiligen Bewegungsgröße (v, s und/oder a) nach einem Fuzzy-Algorithmus festgelegt werden.

5. Handwerkzeugmaschine mit drehender Antriebsbewegung, insbesondere Bohr- bzw. Schlagbohrmaschine oder Bohrhammer, welche mit Mitteln (15) zum Unterbrechen der Drehantriebstätigkeit ausgestattet ist, die eine Vorrichtung (16) zum Erfassen einer die räumliche Bewegung der Handwerkzeugmaschine (10) als Ganzes kennzeichnenden Bewegungsgröße und eine Vergleichseinrichtung (17) zum Vergleichen des jeweiligen Wertes der Bewegungsgröße mit einem vorgegebenen Schwellwert (s', v' oder a') umfassen, **dadurch gekennzeichnet, daß** die Vorrichtung (16) zum fortlaufenden Erfassen des jeweiligen Wertes von verschiedenen Bewegungsgrößen (s, v oder a) ausgebildet ist und die Vergleichseinrichtung (17) zum Vergleichen dieser Werte mit zugehörigen Schwellwerten (s', v' oder a') eingerichtet ist, und daß ein Operator (18) vorgesehen ist, der nach Erreichen oder Überschreiten von wenigstens zwei der Schwellwerte (s', v' oder a') einen Aktor (19) zum Unterbrechen der Antriebstätigkeit aktiviert.

6. Handwerkzeugmaschine nach Anspruch 5, **dadurch gekennzeichnet, daß** der Aktor (19) als Trennkupplung im Antriebsstrang der Handwerkzeugmaschine (10) und/oder als Schalter zum Abschalten des Motors und/oder als Kupplung zur schlagartigen Verbindung eines Gehäuses (11) der Handwerkzeugmaschine mit dem Antriebsstrang ausgebildet ist.

7. Handwerkzeugmaschine nach Anspruch 5, **dadurch gekennzeichnet, daß** die Vorrichtung (16) zum Erfassen des jeweiligen Meßwertes der Bewegungsgröße einen Sensor (20) aufweist, der als Beschleunigungsaufnehmer ausgebildet ist und der Erzeugung eines Beschleunigungssignals dient, und daß darüber hinaus Integrationsglieder (21, 22) zur Bestimmung weiterer Bewegungsgrößen vorgesehen sind.

8. Handwerkzeugmaschine nach Anspruch 7, **dadurch gekennzeichnet, daß** die Vorrichtung (16) einen ersten Integrator (21) für das Geschwindigkeitssignal (v) und einen zweiten Integrator (22) für das Wegsignal (s) aufweist.

9. Handwerkzeugmaschine nach Anspruch 5, **dadurch gekennzeichnet, daß** eine Auswerteeinrichtung (18') vorgesehen ist, in der die Schwellwerte (s', v' und/oder a') für die Bewegungsgrößen (v, s und/oder a) nach einem Fuzzy-Algorithmus festlegbar sind.

10. Handwerkzeugmaschine nach Anspruch 9, **dadurch gekennzeichnet, daß** die Auswerteeinrichtung (18') durch einen Mikrocontroller gebildet wird.

## Claims

1. Method of interrupting the drive action of a hand-held power tool (10) with rotating drive movement, in particular of a power drill or percussion power drill or of a hammer drill, in which, during the operation of the hand-held power tool (10), the value of a movement variable characterizing the spatial movement of the hand-held power tool as a whole is sensed, an acceleration (a) which the hand-held power tool (10) experiences, or a speed (v) with which it is moved, or a distance (s) which it covers being used as the movement variable, and in which, according to the value of the movement variable, the rotary drive action of the hand-held power tool (10) is interrupted when a certain threshold value (s', v', a') is reached or exceeded, **characterized in that** the values of various movement variables are continuously sensed and the rotary drive action of the hand-held power tool (10) is interrupted only when at least two values of different movement variables have reached or exceeded a threshold value (v', s' or a') predetermined for the respective movement variable.

2. Method according to Claim 1, **characterized in that** the values of the movement variables distance (s) and speed (v) are sensed and **in that** the rotary drive action is interrupted when both associated threshold values (s' and v') have been reached or exceeded.

3. Method according to either of Claims 1 and 2, **characterized in that** the interruption of the rotary drive action is brought about by decoupling in the drive train of the hand-held power tool (10) and/or by switching off a drive motor of the hand-held power tool (10) and/or by abruptly connecting a housing (11) of the hand-held power tool (10) to the drive train.

4. Method according to one of Claims 1 to 3, **characterized in that** the threshold values (v', s' and/or a') of the respective movement variable (v, s and/or a) are fixed on the basis of a fuzzy algorithm.

5. Hand-held power tool with rotating drive movement, in particular a power drill or percussion power drill or hammer drill, which is equipped with means (15) for interrupting the rotary drive action which comprise a device (16) for sensing a movement variable characterizing the spatial movement of the hand-held power tool (10) as a whole and a comparison device (17) for comparing the respective value of the movement variable with a prescribed threshold value (s', v' or a'), **characterized in that** the device (16) is designed for continuously sensing the respective value of various movement variables (s, v or a) and the comparison device (17) is set up for comparing these values with associated threshold values (s', v' or a'), and **in that** an operator (18) is provided, which, after at least two of the threshold values (s', v' or a') have been reached or exceeded, activates an actuator (19) for interrupting the drive action.

6. Hand-held power tool according to Claim 5, **characterized in that** the actuator (19) is designed as a disconnecting clutch in the drive train of the hand-held power tool (10) and/or as a switch for switching off the motor and/or as a coupling for abruptly connecting a housing (11) of the hand-held power tool to the drive train.

7. Hand-held power tool according to Claim 5, **characterized in that** the device (16) for sensing the respective measured value of the movement variable has a sensor (20) which is designed as an acceleration pickup and serves for generating an acceleration signal, and **in that** integration elements (21, 22) are additionally provided for the determination of further movement variables.

8. Hand-held power tool according to Claim 7, **characterized in that** the device (16) has a first integrator (21) for the speed signal (v) and a second integrator (22) for the displacement signal (s).

9. Hand-held power tool according to Claim 5, **characterized in that** an evaluation device (18') is provided, in which the threshold values (s', v' and/or a') for the movement variables (v, s and/or a) can be fixed on the basis of a fuzzy algorithm.

10. Hand-held power tool according to Claim 9, **characterized in that** the evaluation device (18') is formed by a microcontroller.

## Revendications

1. Procédé d'interruption de l'entraînement d'une machine outil à main (10) à mouvement d'entraînement rotatif, en particulier une perceuse simple ou à percussion, ou un marteau perforateur, procédé selon lequel quand la machine outil à main (10) est en service, on saisit la valeur d'une grandeur de mouvement caractérisant globalement le mouvement dans l'espace de la machine outil à main, la grandeur utilisée étant une accélération (a) à laquelle est soumise la machine outil (10), ou une vitesse (v) avec laquelle elle se déplace, ou une course (s) qu'elle effectue, et en fonction de la valeur de la grandeur de mouvement, la transmission du mouvement de rotation de la machine outil à main (10) est interrompue quand est atteinte ou dépassée une valeur de seuil (s', v', a') définie,
**caractérisé en ce que**
les valeurs des différentes grandeurs de mouvement sont saisies en permanence, et l'entraînement en rotation de la machine outil à main (10) est interrompu seulement quand au moins les valeurs de deux grandeurs de mouvement différentes ont atteint ou dépassé chacune la valeur de seuil correspondante (v', s', a').

2. Procédé selon la revendication 1,
**caractérisé en ce que**
les valeurs des grandeurs de mouvement que sont la course (s) et la vitesse (v) sont saisies, et l'entraînement en rotation est interrompu quand deux valeurs de seuil correspondantes (s' et v') sont atteintes ou dépassées.

3. Procédé selon la revendication 1 ou 2,
**caractérisé en ce que**
l'interruption de l'entraînement est obtenue par un désaccouplement opéré dans la ligne d'entraînement de la machine outil à main (10) et/ou par coupure du moteur d'entraînement de la machine outil à main (10) et/ou par la liaison soudaine du boîtier (11) de la machine outil à main (10) avec la ligne d'entraînement.

4. Procédé selon l'une quelconque des revendications 1 à 3,
**caractérisé en ce que**
les valeurs de seuil (v', s' et/ou a') des diverses grandeurs de mouvement (v, s et/ou a) sont déterminées par un algorithme de logique floue.

5. Machine outil à main entraînée en rotation, en particulier perceuse simple ou à percussion ou marteau perforateur, équipée pour interrompre l'entraînement en rotation, de moyens (15) comprenant un dispositif (16) pour saisir une grandeur de mouvement caractérisant globalement le mouvement dans l'espace de la machine outil à main (10), et un dispositif (17) servant à comparer la valeur de chaque grandeur de déplacement à une valeur de seuil (s', v', a') donnée à l'avance,
**caractérisée en ce que**
le dispositif (16) est constitué pour saisir en permanence la valeur de chacune des différentes grandeurs de mouvement (s, v ou a) et le dispositif de comparaison (17) est conçu pour comparer ces valeurs aux valeurs de seuil (s', v' ou a') correspondantes, un opérateur (18) étant prévu pour, quand au moins deux valeurs des valeurs de seuil (s', v' ou a') sont atteintes ou dépassées, activer un acteur (19) servant à interrompre l'entraînement.

6. Machine outil à main selon la revendication 5,
**caractérisée en ce que**
l'acteur (19) a la forme d'un embrayage de séparation monté dans la ligne d'entraînement de la machine outil (10) et/ou d'un contacteur pour couper le moteur et/ou d'un accouplement servant à créer une liaison soudaine du boîtier (11) de la machine outil à la ligne d'entraînement.

7. Machine outil à main selon la revendication 5,
**caractérisée en ce que**
le dispositif (16) comporte un détecteur (20) servant à saisir chaque valeur mesurée d'une grandeur de mouvement, et ayant la forme d'un accéléromètre, et le dispositif sert à produire un signal d'accélération, des organes d'intégration (21, 22) étant de plus prévus pour définir d'autres grandeurs de mouvement.

8. Machine outil à main selon la revendication 7,
**caractérisée en ce que**
le dispositif (16) comprend un premier intégrateur (21) pour le signal de vitesse (v) et un second intégrateur (22) pour le signal de course (a).

9. Machine outil à main selon la revendication 5,
**caractérisée en ce qu'**
il est prévu un dispositif d'exploitation (18') dans lequel les valeurs de seuil (s', v' et/ou a') correspondant aux grandeurs de mouvement (v, s et/ou a) peuvent être fixées par un algorithme de logique floue.

10. Machine outil à main selon la revendication 9,
**caractérisée en ce que**
le dispositif d'exploitation (18') est constitué par un micro-contrôleur.
